(19) Europäisches Patentamt
European Patent Office
Office européen des brevets

(11) **EP 3 458 337 B1**

(12) **EUROPÄISCHE PATENTSCHRIFT**

(45) Veröffentlichungstag und Bekanntmachung des Hinweises auf die Patenterteilung:
**15.09.2021 Patentblatt 2021/37**

(21) Anmeldenummer: **17723677.5**

(22) Anmeldetag: **12.05.2017**

(51) Int Cl.:
**B62D 5/00** *(2006.01)*

(86) Internationale Anmeldenummer:
**PCT/EP2017/061484**

(87) Internationale Veröffentlichungsnummer:
**WO 2017/198565 (23.11.2017 Gazette 2017/47)**

(54) **STEER-BY-WIRE-SYSTEM, KRAFTFAHRZEUG UND VERFAHREN ZUM BETREIBEN EINES STEER-BY-WIRE-SYSTEMS**

STEER-BY-WIRE SYSTEM, MOTOR VEHICLE, AND METHOD FOR OPERATING A STEER-BY-WIRE SYSTEM

SYSTÈME À COMMANDE ÉLECTRIQUE « STEER-BY-WIRE », VÉHICULE AUTOMOBILE ET PROCÉDÉ DE FONCTIONNEMENT D'UN SYSTÈME À COMMANDE ÉLECTRIQUE « STEER-BY-WIRE »

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.05.2016 DE 102016208775**

(43) Veröffentlichungstag der Anmeldung:
**27.03.2019 Patentblatt 2019/13**

(73) Patentinhaber:
• **Ford Global Technologies, LLC**
 **Dearborn, MI 48126 (US)**
• **ThyssenKrupp Presta Aktiengesellschaft**
 **9492 Eschen (LI)**

(72) Erfinder:
• **AWAN, Muhammad Adeel**
 **52134 Herzogenrath (DE)**
• **DORNHEGE, Jens**
 **50259 Pulheim (DE)**

• **WEGNER, Goetz-Philipp**
 **44227 Dortmund (DE)**
• **HOFMANN, Otto**
 **50374 Erftstadt (DE)**
• **ENGELS, Frank Peter**
 **42653 Solingen (DE)**
• **POLMANS, Kristof**
 **6464 Tarrenz (AT)**

(74) Vertreter: **Bonsmann, Joachim Bernhard**
**Bonsmann . Bonsmann . Frank**
**Patentanwälte**
**Kaldenkirchener Strasse 35 a**
**41063 Mönchengladbach (DE)**

(56) Entgegenhaltungen:
**EP-B1- 1 268 257          WO-A1-2004/071848**
**WO-A1-2005/012063      JP-A- 2006 151 073**
**US-A1- 2004 140 147**

EP 3 458 337 B1

**Beschreibung**

Die Erfindung betrifft ein Steer-by-Wire-System für ein Kraftfahrzeug, aufweisend wenigstens zwei in einem Normalbetrieb des Steer-by-Wire-Systems unabhängig voneinander lenkbare Räder, wenigstens zwei Lenkaktuatoren, die jeweils einem der lenkbaren Räder zugeordnet sind und zum Einstellen eines Lenkwinkels des jeweiligen lenkbaren Rads eingerichtet sind, und wenigstens eine signaltechnisch mit den Lenkaktuatoren verbundene Lenkelektronik, die eingerichtet ist, die Lenkaktuatoren auf Basis von Lenkbefehlen individuell anzusteuern.

Des Weiteren betrifft die Erfindung ein Kraftfahrzeug und ein Verfahren zum Betreiben eines Steer-by-Wire-Systems eines Kraftfahrzeugs, wobei das Steer-by-Wire-System wenigstens zwei in einem Normalbetrieb des Steer-by-Wire-Systems unabhängig voneinander lenkbare Räder und wenigstens zwei Lenkaktuatoren aufweist, die jeweils einem der lenkbaren Räder zugeordnet sind und zum Einstellen eines Lenkwinkels des jeweiligen lenkbaren Rads eingerichtet sind.

Ein herkömmliches Lenksystem eines Kraftfahrzeugs kann mechanisch ausgebildet sein und ein Hilfsaggregat zur Ausübung einer Lenkunterstützung aufweisen. Bei einem solchen Lenksystem ist lenkbares Rad einer Radachse der einen Spur direkt mechanisch mit dem lenkbaren Rad der Radachse der anderen Spur verbunden. Zudem ist ein Lenkrad des Lenksystems, insbesondere über einen Zwischenschaft, eine Lenksäule und ein Lenkgetriebe, direkt mechanisch mit den lenkbaren Rädern verbunden. Bei einem solchen Lenksystem ist aufgrund der mechanischen Verbindung der Komponenten des Lenksystems ein Lenken des Kraftfahrzeugs auch bei Ausfall des Hilfsaggregats möglich, jedoch muss hierzu von einem Fahrer eine größere Kraft auf das Lenkrad aufgebracht werden.

Des Weiteren sind Steer-by-Wire-Systeme für Kraftfahrzeuge bekannt, bei denen das Lenkrad nicht über Lenksystemkomponenten mechanisch mit den lenkbaren Rädern verbunden ist. Auch bei einem Steer-by-Wire-System können die lenkbaren Räder einer Radachse über ein Lenkgestänge direkt mechanisch miteinander verbunden sein. Ein Steer-by-Wire-System hat gegenüber dem zuvor beschriebenen herkömmlichen Lenksystem den Vorteil, dass ein Unfallverhalten des Kraftfahrzeugs verbessert ist, da keine Lenksäule vorhanden ist, die sich im Fall eines Unfalls in Richtung eines Fahrers verlagern könnte. Hierdurch wird eine Verletzungsgefahr für den Fahrer reduziert. Ein Steer-by-Wire-System ermöglicht es zudem, das Lenkrad im Falle eines Unfalls von einer Fahrerposition zu einer Beifahrerposition zu verlagern, um das Verletzungsrisiko für den Fahrer zu reduzieren.

Bei einer speziellen Version eines Steer-by-Wire-Systems ist jedem lenkbaren Rad eines Kraftfahrzeugs ein eigener Lenkaktuator zugeordnet, mit dem ein Lenkwinkel des jeweiligen lenkbaren Rads unabhängig von den übrigen lenkbaren Rädern individuell einstellbar ist, wodurch eine Einzelradlenkung realisierbar ist. Ein Vorteil eines solchen Steer-by-Wire-Systems ist beispielsweise, dass das Lenken des Kraftfahrzeugs in allen Fahrsituationen gemäß dem Ackermann-Prinzip realisierbar ist, was aufgrund der dadurch gegebenen Reibungsverringerung zwischen den Rädern und der Fahrbahn mit einer Verringerung von Kohlendioxidemissionen des Kraftfahrzeugs, einer verringerten Radabnutzung, einer Erhöhung des Grips bei einer Kurvenfahrt und dergleichen verbunden ist. Da die einzelnen Lenkaktuatoren an verschiedenen Positionen an dem Kraftfahrzeug angeordnet werden können, ist gegenüber herkömmlichen Lenksystemen, wie sie oben beschrieben sind, unter anderem der Vorteil gegeben, dass ein frontseitiger Überhang eines Kraftfahrzeugs reduziert werden kann, was die Freiheit beim Design des Kraftfahrzeugs vergrößert.

Aus der US 2004 / 0 140 147 A1 ist ein gattungsgemäßes Steer-by-Wire-System bekannt, bei dem im Störungsfalle eines Lenkaktuators dynamisch ein Ausgleichslenkeinschlag für einen verbleibenden funktionsfähigen Lenkaktuator berechnet wird.

Auch bei der US 7 912 606 B2 erfolgt bei Erkennung eines gestörten Lenkaktuators eine dynamische Lenkeinschlagsberechnung abhängig insbesondere von der Lage des Rotationsmittelpunkts des Fahrzeugs.

Aufgabe der Erfindung ist es, die Fahrsicherheit eines Kraftfahrzeugs zu erhöhen, das ein Steer-by-Wire-System zum individuellen Lenken von lenkbaren Rädern aufweist.

Diese Aufgabe wird durch die unabhängigen Ansprüche gelöst. Vorteilhafte Ausgestaltungen sind insbesondere in den abhängigen Ansprüchen angegeben, die jeweils für sich genommen oder in verschiedener Kombination miteinander einen weiterbildenden oder vorteilhaften Aspekt der Erfindung darstellen können.

Ein erfindungsgemäßes Steer-by-Wire-System für ein Kraftfahrzeug umfasst wenigstens zwei in einem Normalbetrieb des Steer-by-Wire-Systems unabhängig voneinander lenkbare Räder, wenigstens zwei Lenkaktuatoren, die jeweils einem der lenkbaren Räder zugeordnet sind und zum Einstellen eines Lenkwinkels des jeweiligen lenkbaren Rads eingerichtet sind, und wenigstens eine signaltechnisch mit den Lenkaktuatoren verbundene Lenkelektronik, die eingerichtet ist, die Lenkaktuatoren auf Basis von Lenkbefehlen individuell anzusteuern. Erfindungsgemäß ist die Lenkelektronik eingerichtet, zu erfassen, ob einer der Lenkaktuatoren ausgefallen ist und bei Erfassung eines einen Notbetrieb des Steer-by-Wire-Systems kennzeichnenden Ausfalls eines Lenkaktuators den wenigstens einen weiteren Lenkaktuator mit einer Lenkübersetzung anzusteuern, deren Direktheit von einer Direktheit einer Lenkübersetzung in dem Normalbetrieb abweicht.

Durch die erfindungsgemäße Abweichung der Lenkübersetzung in dem Notbetrieb des Steer-by-Wire-Systems gegenüber der Lenkübersetzung während des Normalbetriebs des Steer-by-Wire-Systems kann während des Notbetriebs ein Lenkbefehl, den ein Fahrer des Kraftfahrzeugs durch Betätigung des Lenkrads des Kraftfahrzeugs erzeugt, je nach Bedarf direkter oder indirekter auf das wenigstens eine lenkbare Rad mit dem nicht ausgefallenen Lenkaktuator übertragen werden. Dies ist deshalb erforderlich, da das lenkbare Rad mit dem ausgefallenen Lenkaktuator nicht mehr zur Durchführung eines Lenkvorgangs verwendet werden kann. Daher muss der Lenkvorgang mittels des wenigstens einen lenkbaren Rads mit dem nicht ausgefallenen Lenkaktuator durchgeführt werden, was beispielsweise bei einer Kurvenfahrt einen größeren Lenkwinkel für das lenkbare Rad mit dem nicht ausgefallenen Lenkaktuator erforderlich macht. Um den Fahrer in einer solchen Situation zu unterstützen, wird das Lenkverhältnis erhöht, so dass eine Lenkradbewegung zu einem stärkeren Einlenken des noch lenkbaren Rads führt. Dadurch kann verhindert werden, dass der Fahrer die Fahrzeugkontrolle verliert. Hierdurch wird die Fahrsicherheit bzw. Beherrschbarkeit des Kraftfahrzeugs bei einem Ausfall eines Lenkaktuators verbessert.

Bevorzugt wird das Übersetzungsverhältnis zwischen dem eingebrachten Lenkwinkel und dem Lenkeinschlag an dem mindestens einen noch verfügbaren Rad in Abhängigkeit von der Fahrgeschwindigkeit und dem unmittelbar vor dem Eintritt des Notbetriebs vorliegenden Lenkeinschlag variiert. Bevorzugt ist die Übersetzung bei niedrigeren Geschwindigkeiten direkter, d.h. bei einem definierten, in das Steuerrad eingebrachten Lenkwinkel ist der Lenkeinschlag grösser als bei hohen Geschwindigkeiten. Weiter ist bei großen Lenkeinschlägen unmittelbar vor Eintritt des Notbetriebs die Übersetzung ebenfalls größer als bei geringem Lenkeinschlag.

Mit folgender Formel kann das Verhältnis ausgedrückt werden:

$$UE = a \cdot \frac{1}{v_0 + v} + b \cdot \sin\left(|LE|\right) \tag{1}$$

mit:

UE: Übersetzung
v: Fahrzeuggeschwindigkeit
$v_0$: Anfangswert (z.B. 10km/h)
LE: Rad-Lenkeinschlagwinkel
a, b: Kennzahlen, die in Versuchen zu bestimmen sind.

Bevorzugt werden die Kennzahlen a, b zusätzlich noch davon abhängig bestimmt, ob es möglich ist, den vom Ausfall betroffenen Lenkaktuator in seiner Verschwenkung zu bremsen oder freizugeben.

Zur Darstellung im Kraftfahrzeug ist es bevorzugt möglich, für mehrere Fahrzeuggeschwindigkeiten, beispielsweise 30, 50, 80, 110 km/h, und jeweils für mehrere Lenkeinschläge, beispielsweise 0°, 10° nach rechts, 10° nach links und eventuell auch 20° nach rechts und auch 20° nach links, das bevorzugte Übersetzungsverhältnis zu bestimmen und zwischen den Werten eine Interpolationsformel zu verwenden. Das bevorzugte Übersetzungsverhältnis ist dabei dadurch bestimmt, dass vom Lenkmechanismus des funktionierenden Rades bzw. der funktionierenden Räder das geringste Verstellmoment oder die geringste Verstellkraft aufgewendet werden muss, um die vorher eingestellte Kurvenbahn des Fahrzeuges mit einer Abweichung von weniger als 15% weiter zu halten, wenn der vom Fahrer eingebrachte Lenkwinkel unverändert bleibt.

Der Lenkwinkel des lenkbaren Rads mit dem nicht ausgefallenen Lenkaktuator bzw. die im Notbetrieb des Steer-by-Wire-Systems gegebene Lenkübersetzung wird derart gewählt, dass das Kraftfahrzeug möglichst wenig von einer vor dem Ausfall des Lenkaktuators gewählten Fahrtrichtung abweicht. Hierbei wird die Lenkübersetzung während des Notbetriebs vorzugsweise derart gewählt, dass der zum Durchführen eines vor dem Ausfall des Lenkaktuators geplanten Fahrvorgangs erforderliche Lenkwinkel nicht oder nur sehr geringfügig geändert werden muss, wenn das Kraftfahrzeug nur noch mit dem lenkbaren Rad mit dem nicht ausgefallenen Lenkaktuator gelenkt wird.

Im Gegensatz hierzu kann es bei einem herkömmlichen Lenksystem passieren, dass der Fahrer, der durch den Ausfall eines Lenkaktuators überrascht wird, nicht schnell genug reagiert und dadurch das Kraftfahrzeug nicht mit einem zum Durchführen eines sicheren Fahrvorgangs erforderlichen, insbesondere stärkeren, Lenkradeinschlag lenkt. Hierdurch kann es passieren, dass das Kraftfahrzeug zumindest kurzzeitig eine seitliche Bewegung ausführt und dadurch ungewollt eine Fahrspur verlässt. Hiermit ist ein erhöhtes Kollisionsrisiko verbunden. Eine solche Erhöhung des Kollisionsrisikos kann mit der Erfindung zuverlässig verhindert werden, da beim Auftreten eines Ausfalls eines Lenkaktuators das Steer-by-Wire-System von dem Normalbetrieb in den Notbetrieb überführt und dadurch die Lenkübersetzung derart verändert wird, dass sich für den Fahrer der Lenkaufwand nicht oder annähernd nicht erhöht. Der Fahrer kann das Kraftfahrzeug daher mit dem ihm vertrauten Lenkaufwand steuern, was mit einer Erhöhung der Fahrsicherheit einhergeht.

Es sind gemäß der Erfindung keine zusätzlichen, redundanten Lenksystemkomponenten, wie beispielsweise ein zusätzlicher Lenkaktuator, eine zusätzliche Elektronik, ein zusätzlicher Drehmomentsensor und dergleichen, erforderlich, um bei einem Ausfall eines Lenkaktuators einen sicheren Fahrbetrieb des Kraftfahrzeugs zu gewährleisten. Auch müssen nicht das Bordnetz und Kommunikationsschnittstellen zu dem Lenksystem des Kraftfahrzeugs neu entwickelt werden, um eine ununterbrochene Verfügbarkeit eines redundanten Bordnetzes und redundanten Kommunikationsschnittstellen sicherstellen zu können. Folglich ist die Erfindung kostengünstig unter Verwendung von bereits mechanischen vorhandenen Komponenten realisierbar.

Die Lenkaktuatoren können beispielsweise jeweils einen elektrischen Stellmotor aufweisen, mit dem der Lenkwinkel des jeweiligen lenkbaren Rads einstellbar ist. Die Lenkaktuatoren können kommunikationstechnisch miteinander und/oder mit einem Feedback-Aktuator des Steer-by-Wire-Systems verbunden sein. Der Feedback-Aktuator ist mit dem Lenkrad verbunden und kann aus Lenkbefehlen des Fahrers elektrische Lenkbefehlsignale erzeugen, die der Lenkelektronik zugeführt werden. Alternativ kann ein anderweitiger Sensor zum Erzeugen der Lenkbefehlsignale vorhanden sein. Zudem kann mit dem Feedback-Aktuator dem Fahrer ein realistisches Lenkgefühl vermittelt werden, indem der Feedback-Aktuator Kräfte auf das Lenkrad ausübt, die auf das Fahrzeug einwirkenden Lastkräften mit oder ohne Dämpfung entsprechen und über eine Fahrzeugsensorik erfasst werden können.

Das erfindungsgemäße Steer-by-Wire-System kann zum Lenken von lenkbaren Vorderrädern eines Kraftfahrzeugs verwendet werden. Das erfindungsgemäße Steer-by-Wire-System kann auch zum Lenken von lenkbaren Vorderrädern und lenkbaren Hinterrädern des Kraftfahrzeugs verwendet werden, wozu das Steer-by-Wire-System für jedes lenkbare Rad einen separaten bzw. eigenen Lenkaktuator aufweist. Fällt ein Lenkaktuator aus, können gemäß der Erfindung die übrigen Lenkaktuatoren angesteuert werden, um die Beherrschbarkeit des Kraftfahrzeugs zu verbessern.

Die lenkbaren Räder sind in dem Normalbetrieb des Steer-by-Wire-Systems unabhängig voneinander bzw. individuell lenkbar, wodurch im Normalbetrieb eine Einzelradlenkung realisiert ist.

Die signaltechnisch mit den Lenkaktuatoren verbundene Lenkelektronik kann durch eine in eine vorhandene Fahrzeugelektronik implementierte Software oder als separate Baueinheit ausgebildet sein. Der Lenkelektronik werden Lenkbefehle in elektrischer Form zugeführt, die beispielsweise mit einer Lenkbewegungen des Lenkrads erfassenden Sensorik erzeugt werden. Zudem wird der Lenkelektronik bei einem Ausfall eines Lenkaktuators ein für den jeweiligen Lenkaktuator spezifisches, elektrisches Ausfallsignal zugeführt. Dieses individuelle Ausfallsignal kann beispielsweise von dem ausgefallenen Lenkaktuator, von einer daran angeordneten Sensorik oder anderweitig erzeugt werden. Empfängt bzw. erfasst die Lenkelektronik ein solches individuelles Ausfallsignal, schaltet die Lenkelektronik automatisch von dem Normalbetrieb auf den Notbetrieb um. Hierbei wählt die Lenkelektronik aus einer oder mehreren Lenkübersetzungen eine bestimmte Lenkübersetzung aus und verwendet diese zum Ansteuern des wenigstens einen nicht ausgefallenen Lenkaktuators. Insbesondere kann in der Lenkelektronik bzw. einer davon umfassten Speichereinheit für jedes Ausfallszenario eine bestimmte Lenkübersetzung gespeichert sein, die in Abhängigkeit des jeweilig ausgefallenen Lenkaktuators von der Lenkelektronik bzw. einer davon umfassten Datenverarbeitungseinheit ausgewählt werden kann. Die Lenkelektronik erzeugt unter Verwendung der in dem Notbetrieb ausgewählten Lenkübersetzung und den die Eingangssignale für die Lenkelektronik bildenden elektrischen Lenkbefehlen elektrisehe Ausgangssignale bzw. elektrische Ansteuersignale, die dem nicht ausgefallenen Lenkaktuator zugeführt werden.

Eine höhere Direktheit einer Lenkübersetzung bedeutet im Rahmen der Erfindung, dass ein bestimmter Lenkradwinkel des Lenkrads zur Einstellung eines größeren Lenkwinkels des lenkbaren Rads mit dem nicht ausgefallenen Lenkaktuator führt, wohingegen eine reduzierte Direktheit einer Lenkübersetzung entsprechend zu einem kleineren Lenkwinkel des lenkbaren Rads mit dem nicht ausgefallenen Lenkaktuator führt.

Gemäß einer vorteilhaften Ausgestaltung ist die Lenkelektronik eingerichtet, bei Erfassung des Ausfalls des Lenkaktuators den wenigstens einen weiteren Lenkaktuator mit einer direkteren Lenkübersetzung als in dem Normalbetrieb anzusteuern. Hierdurch kann das Kraftfahrzeug insbesondere bei einer Kurvenfahrt durch den Fahrer wie bei einer Fahrt mit nicht ausgefallenen Lenkaktuatoren gesteuert werden, da das lenkbare Rad mit dem nicht ausgefallenen Lenkaktuator stärker eingeschlagen wird und hierdurch die Wirkung des lenkbaren Rads mit dem ausgefallenen Lenkaktuator zusätzlich übernimmt.

Gemäß einer weiteren vorteilhaften Ausgestaltung ist wenigstens ein Lenkaktuator derart ausgelegt, dass er bei seinem Ausfall eine Lenkbewegung des ihm zugeordneten lenkbaren Rads blockiert. Hierdurch wird verhindert, dass sich der momentane Lenkwinkel des dem ausgefallenen Lenkaktuator zugeordneten lenkbaren Rads unkontrolliert ändert bzw. zeitlich variiert, was die Beherrschbarkeit des Kraftfahrzeugs deutlich verschlechtern würde.

Gemäß einer weiteren vorteilhaften Ausgestaltung ist wenigstens ein Lenkaktuator derart ausgelegt, dass er bei seinem Ausfall eine Lenkbewegung des ihm zugeordneten lenkbaren Rads freigibt. Hierdurch kann das lenkbare Rad durch an ihm angreifende Kräfte passiv in eine für den weiteren Fahrvorgang vorteilhafte Lenkstellung gebracht werden, um die Beherrschbarkeit des Kraftfahrzeugs zu verbessern. Dadurch kann verhindert werden, dass das lenkbare Rad einen großen Lenkwinkel annimmt, der zu großen auf das Kraftfahrzeug einwirkenden Querkräften führt, die ein starkes Gegenlenken erforderlich machen würden, um das Kraftfahrzeug beispielsweise auf einer Fahrspur zu halten.

Gemäß einer weiteren vorteilhaften Ausgestaltung ist wenigstens ein Lenkaktuator derart ausgelegt, dass er bei seinem Ausfall eine Lenkbewegung des ihm zugeordneten lenkbaren Rads dämpft. Beispielsweise kann der Lenkaktuator derart ausgelegt sein, dass bei seinem Ausfall eine Lenkbewegung des ihm zugeordneten lenkbaren Rads erst ab einer Überschreitung eines vorgegebenen Drehmomentgrenzwertes möglich ist. Hierzu kann beispielsweise ein Phasenrelais des ausgefallenen Lenkaktuators geschlossen werden. Auch diese Ausgestaltung verbessert die Beherrschbarkeit des Kraftfahrzeugs. Welche der drei zuletzt genannten Ausgestaltungen des Lenkaktuators gewählt wird, hängt von der jeweilig gegebenen Radaufhängung des Kraftfahrzeugs ab.

Gemäß einer weiteren vorteilhaften Ausgestaltung umfasst das Steer-by-Wire-System wenigstens eine signaltechnisch mit der Lenkelektronik verbundene Kopplungseinrichtung, die eingerichtet ist, die lenkbaren Räder einer Radachse in einem Kopplungszustand der Kopplungseinrichtung mechanisch aneinander zu koppeln und in einem Entkopplungszustand der Kopplungseinrichtung mechanisch voneinander zu entkoppeln, wobei die Lenkelektronik eingerichtet ist, die Kopplungseinrichtung derart anzusteuern, dass sich die Kopplungseinrichtung in dem Normalbetrieb des Steer-by-Wire-Systems in ihrem Entkopplungszustand und in dem Notbetrieb des Steer-by-Wire-Systems in ihrem Kopplungszustand befindet. Hierbei kann die Lenkübersetzung in dem Notbetrieb des Steer-by-Wire-Systems indirekter als in dem Normalbetrieb des Steer-by-Wire-Systems sein, damit der wenigstens eine nicht ausgefallene Lenkaktuator nicht überbeansprucht wird. Die Kopplungseinrichtung kann wenigstens einen Verriegelungsmechanismus aufweisen, der mit der Lenkelektronik ansteuerbar ist und mit dem Kopplungselemente mechanisch aneinander koppelbar und voneinander entkoppelbar sind, um dem Kopplungszustand bzw. den Entkopplungszustand der Kopplungseinrichtung herbeizuführen.

Erfindungsgemäß erfolgt die Einstellung der abweichenden Lenkübersetzung einmalig bei Eintritt des Notbetriebes; d.h., die - ggf. wie vorstehend beschrieben - bestimmte und dann einmal bei Eintritt in den Notbetrieb einmal eingestellte abweichende Lenkübersetzung bleibt bei dieser Ausführungsform bis zum Ende der jeweiligen Notbetriebsphase konstant.

Ein erfindungsgemäßes Kraftfahrzeug umfasst ein Steer-by-Wire-System nach einer der vorgenannten Ausgestaltungen oder einer beliebigen Kombination von wenigstens zwei dieser Ausgestaltungen miteinander.

Mit dem Kraftfahrzeug sind die oben mit Bezug auf das Steer-by-Wire-System genannten Vorteile entsprechend verbunden. Das Kraftfahrzeug kann ein Personenkraftwagen oder ein Lastkraftwagen sein.

Gemäß einer vorteilhaften Ausgestaltung umfasst das Kraftfahrzeug wenigstens ein signaltechnisch mit der Lenkelektronik verbundenes Bremsmodul, das zum Ansteuern von zumindest den lenkbaren Rädern zugeordneten Radbremsen eingerichtet ist, wobei die Lenkelektronik eingerichtet ist, das Bremsmodul derart anzusteuern, dass das Bremsmodul in dem Notbetrieb des Steer-by-Wire-Systems eine maximal erzeugbare Bremskraft derjenigen Radbremse, die einem lenkbaren Rad mit einem ausgefallenen Lenkaktuator zugeordnet ist, auf einen vorgegebenen Grenzwert begrenzt. Hierdurch wird verhindert, dass das mit dem ausgefallenen Lenkaktuator nicht mehr lenkbare Rad während eines Bremsvorgangs bzw. durch dabei auf das Rad einwirkende Kräfte einen großen Lenkwinkel einnimmt, was die Fahrsicherheit verschlechtern würde.

Nach einem erfindungsgemäßen Verfahren zum Betreiben eines Steer-by-Wire-Systems eines Kraftfahrzeugs, wobei das Steer-by-Wire-System wenigstens zwei in einem Normalbetrieb des Steer-by-Wire-Systems unabhängig voneinander lenkbare Räder und wenigstens zwei Lenkaktuatoren aufweist, die jeweils einem der lenkbaren Räder zugeordnet sind und zum Einstellen eines Lenkwinkels des jeweiligen lenkbaren Rads eingerichtet sind, wird erfasst, ob einer der Lenkaktuatoren ausgefallen ist, und wird bei Erfassung eines einen Notbetrieb des Steer-by-Wire-Systems kennzeichnenden Ausfalls eines Lenkaktuators der wenigstens eine weitere Lenkaktuator mit einer Lenkübersetzung angesteuert, deren Direktheit von einer Direktheit einer Lenkübersetzung in dem Normalbetrieb abweicht.

Mit dem Verfahren sind die oben mit Bezug auf das Steer-by-Wire-System genannten Vorteile entsprechend verbunden. Insbesondere kann das Steer-by-Wire-System zur Durchführung des Verfahrens verwendet werden. Insofern können vorteilhafte Ausgestaltungen des Steer-by-Wire-Systems vorteilhafte Ausgestaltungen des Verfahrens sein, auch wenn hierauf im Folgenden nicht explizit hingewiesen wird.

Gemäß einer weiteren vorteilhaften Ausgestaltung wird bei Erfassung des Ausfalls des Lenkaktuators der wenigstens eine weitere Lenkaktuator mit einer direkteren Lenkübersetzung als in dem Normalbetrieb angesteuert. Mit dieser Ausgestaltung sind die oben mit Bezug auf die entsprechende Ausgestaltung des Steer-by-Wire-Systems genannten Vorteile entsprechend verbunden.

Im Folgenden wird die Erfindung unter Bezugnahme auf die anliegende Figur anhand einer bevorzugten Ausführungsform beispielhaft erläutert, wobei die nachfolgend dargestellten Merkmale sowohl jeweils für sich genommen als auch in verschiedener Kombination miteinander einen weiterbildenden oder vorteilhaften Aspekt der Erfindung darstellen können. Es zeigt:

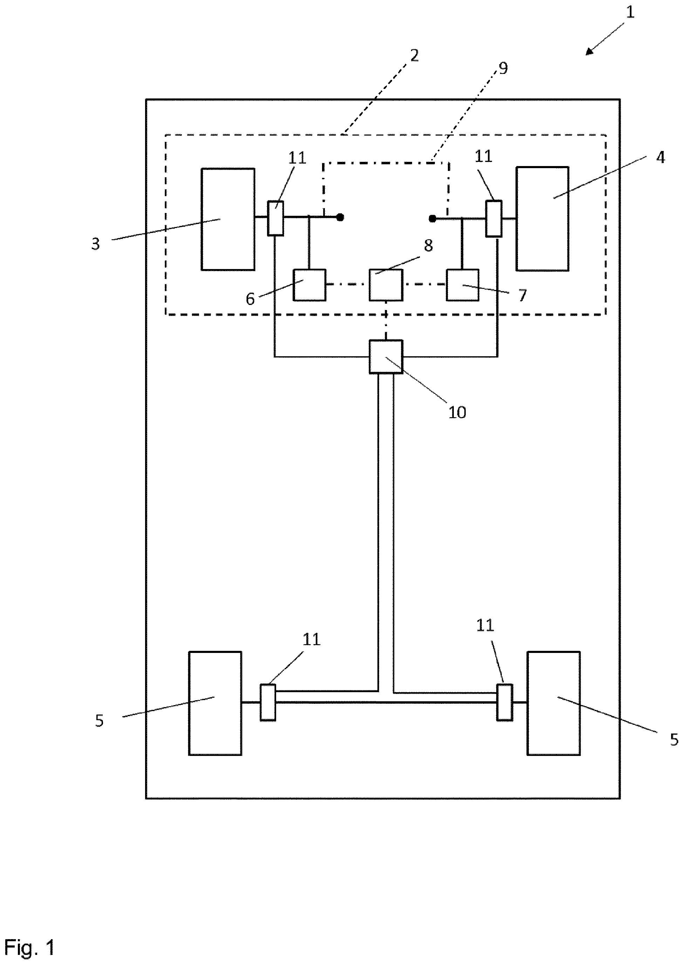

Fig. 1    eine schematische Darstellung eines Ausführungsbeispiels für ein erfindungsgemäßes Kraftfahrzeug.

Fig. 1 zeigt eine schematische Darstellung eines Ausführungsbeispiels für ein erfindungsgemäßes Kraftfahrzeug 1 mit einem Steer-by-Wire-System 2. Das Kraftfahrzeug 1 umfasst zwei lenkbare Vorderräder 3 und 4 und zwei nicht lenkbare Hinterräder 5.

Das Steer-by-Wire-System 2 umfasst die beiden in einem Normalbetrieb des Steer-by-Wire-Systems 2 unabhängig voneinander lenkbaren Vorderräder 2 und zwei Lenkaktuatoren 6 und 7, die jeweils einem der lenkbaren Vorderräder 3 bzw. 4 zugeordnet sind und zum Einstellen eines Lenkwinkels des jeweiligen lenkbaren Vorderrads 3 bzw. 4 eingerichtet sind.

Des Weiteren umfasst das Steer-by-Wire-System 2 eine signaltechnisch mit den Lenkaktuatoren 6 und 7 verbundene Lenkelektronik 8, die eingerichtet ist, die Lenkaktuatoren 6 und 7 auf Basis von Lenkbefehlen bzw. elektrischen Lenkbefehlsignalen individuell anzusteuern.

Die Lenkelektronik 8 ist eingerichtet, zu erfassen, ob einer der Lenkaktuatoren 6 bzw. 7 ausgefallen ist und bei Erfassung eines einen Notbetrieb des Steer-by-Wire-Systems 2 kennzeichnenden Ausfalls eines Lenkaktuators 6 bzw. 7 den weiteren Lenkaktuator 7 bzw. 6 mit einer Lenkübersetzung anzusteuern, deren Direktheit von einer Direktheit einer Lenkübersetzung in dem Normalbetrieb abweicht. Insbesondere kann die Lenkelektronik 8 eingerichtet sein, bei Erfassung des Ausfalls des Lenkaktuators 6 bzw. 7 den weiteren Lenkaktuator 7 bzw. 6 mit einer direkteren Lenkübersetzung als in dem Normalbetrieb anzusteuern.

Diese Anpassung der Lenkübersetzung kann bevorzugt einmalig bei Eintritt des Notbetriebs erfolgen, d.h., die entsprechend angepasste Lenkübersetzung würde dann bis zum Ende der Notbetriebsphase weitergelten.

Wenigstens ein Lenkaktuator 6 bzw. 7 kann derart ausgelegt sein, dass er bei seinem Ausfall eine Lenkbewegung des ihm zugeordneten lenkbaren Rads 3 bzw. 4 blockiert. Alternativ kann wenigstens ein Lenkaktuator 6 bzw. 7 derart ausgelegt sein, dass er bei seinem Ausfall eine Lenkbewegung des ihm zugeordneten lenkbaren Rads 3 bzw. 4 freigibt. Alternativ kann wenigstens ein Lenkaktuator 6 bzw. 7 derart ausgelegt sein, dass er bei seinem Ausfall eine Lenkbewegung des ihm zugeordneten lenkbaren Rads 3 bzw. 4 dämpft.

Das Steer-by-Wire-System 2 kann optional eine signaltechnisch mit der Lenkelektronik 8 verbundene Kopplungseinrichtung 9 aufweisen, die eingerichtet ist, die lenkbaren Räder 3 und 4 der vorderen Radachse in einem Kopplungszustand der Kopplungseinrichtung 9 mechanisch aneinander zu koppeln und in einem Entkopplungszustand der Kopplungseinrichtung 9 mechanisch voneinander zu entkoppeln. Die Lenkelektronik 8 kann hierbei eingerichtet sein, die Kopplungseinrichtung 9 derart anzusteuern, dass sich die Kopplungseinrichtung 9 in dem Normalbetrieb des Steer-by-Wire-Systems 2 in ihrem Entkopplungszustand und in dem Notbetrieb des Steer-by-Wire-Systems 2 in ihrem Kopplungszustand befindet.

Das Kraftfahrzeug 1 umfasst des Weiteren ein signaltechnisch mit der Lenkelektronik 8 verbundenes Bremsmodul 10, das zum Ansteuern von den Rädern 3, 4 und 5 zugeordneten Radbremsen 11 eingerichtet ist. Die Lenkelektronik 8 ist eingerichtet, das Bremsmodul 10 derart anzusteuern, dass das Bremsmodul 10 in dem Notbetrieb des Steer-by-Wire-Systems 2 eine maximal erzeugbare Bremskraft derjenigen Radbremse 11, die einem lenkbaren Rad 3 bzw. 4 mit einem ausgefallenen Lenkaktuator 6 bzw. 7 zugeordnet ist, auf einen vorgegebenen Grenzwert begrenzt.


Bezugszeichenliste


1    Kraftfahrzeug
2    Steer-by-Wire-System
3    lenkbares Rad
4    lenkbares Rad
5    nicht lenkbares Hinterrad
6    Lenkaktuator
7    Lenkaktuator
8    Lenkelektronik
9    Kopplungseinrichtung
10    Bremsmodul
11    Radbremse


**Patentansprüche**

1.  Steer-by-Wire-System (2) für ein Kraftfahrzeug (1), aufweisend wenigstens zwei in einem Normalbetrieb des Steer-by-Wire-Systems (2) unabhängig voneinander lenkbare Räder (3, 4),

    wenigstens zwei Lenkaktuatoren (6, 7), die jeweils einem der lenkbaren Räder (3, 4) zugeordnet sind und zum Einstellen eines Lenkwinkels des jeweiligen lenkbaren Rads (3, 4) eingerichtet sind, und
    wenigstens eine signaltechnisch mit den Lenkaktuatoren (6, 7) verbundene Lenkelektronik (8), die eingerichtet ist, die Lenkaktuatoren (6, 7) auf Basis von Lenkbefehlen individuell anzusteuern, wobei

die Lenkelektronik (8) eingerichtet ist, zu erfassen, ob einer der Lenkaktuatoren (6, 7) ausgefallen ist **dadurch gekennzeichnet, dass** die Lenkelektronik (8) eingerichtet ist, bei Erfassung eines einen Notbetrieb des Steer-by-Wire-Systems (2) kennzeichnenden Ausfalls eines Lenkaktuators (6, 7) den wenigstens einen weiteren Lenkaktuator (6, 7) mit einer Lenkübersetzung anzusteuern, deren Direktheit von einer Direktheit einer Lenkübersetzung in dem Normalbetrieb abweicht, wobei die Lenkelektronik (8) weiterhin eingerichtet ist, aus einer oder mehreren Lenkübersetzungen eine bestimmte Lenkübersetzung auszuwählen und zum Ansteuern des wenigstens einen nicht ausgefallenen Lenkaktuators zu verwenden, und wobei die Einstellung der abweichenden Lenkübersetzung einmalig bei Eintritt des Notbetriebes erfolgt.

2. Steer-by-Wire-System (2) nach Anspruch 1,
**dadurch gekennzeichnet, dass**
die Lenkelektronik (8) eingerichtet ist, bei Erfassung des Ausfalls des Lenkaktuators (6, 7) den wenigstens einen weiteren Lenkaktuator (6, 7) mit einer direkteren Lenkübersetzung als in dem Normalbetrieb anzusteuern.

3. Steer-by-Wire-System (2) nach Anspruch 1 oder 2,
**dadurch gekennzeichnet, dass**
wenigstens ein Lenkaktuator (6, 7) derart ausgelegt ist, dass er bei seinem Ausfall eine Lenkbewegung des ihm zugeordneten lenkbaren Rads (3, 4) blockiert.

4. Steer-by-Wire-System (2) nach Anspruch 1 oder 2,
**dadurch gekennzeichnet, dass**
wenigstens ein Lenkaktuator (6, 7) derart ausgelegt ist, dass er bei seinem Ausfall eine Lenkbewegung des ihm zugeordneten lenkbaren Rads (3, 4) freigibt.

5. Steer-by-Wire-System (2) nach Anspruch 1 oder 2,
**dadurch gekennzeichnet, dass**
wenigstens ein Lenkaktuator (6, 7) derart ausgelegt ist, dass er bei seinem Ausfall eine Lenkbewegung des ihm zugeordneten lenkbaren Rads (3, 4) dämpft.

6. Steer-by-Wire-System (2) nach Anspruch 1 oder 2, **gekennzeichnet durch**
wenigstens eine signaltechnisch mit der Lenkelektronik (8) verbundene Kopplungseinrichtung (9), die eingerichtet ist, die lenkbaren Räder (3, 4) einer Radachse in einem Kopplungszustand der Kopplungseinrichtung (9) mechanisch aneinander zu koppeln und in einem Entkopplungszustand der Kopplungseinrichtung (9) mechanisch voneinander zu entkoppeln, wobei die Lenkelektronik (8) eingerichtet ist, die Kopplungseinrichtung (9) derart anzusteuern, dass sich die Kopplungseinrichtung (9) in dem Normalbetrieb des Steer-by-Wire-Systems (2) in ihrem Entkopplungszustand und in dem Notbetrieb des Steer-by-Wire-Systems (2) in ihrem Kopplungszustand befindet.

7. Steer-by-Wire-System (2) nach einem der vorhergehenden Ansprüche **dadurch gekennzeichnet, dass**
die Einstellung der abweichenden Lenkübersetzung einmalig bei Eintritt des Notbetriebes erfolgt.

8. Kraftfahrzeug (1),
**gekennzeichnet durch**
ein Steer-by-Wire-System (2) nach einem der Ansprüche 1 bis 7.

9. Kraftfahrzeug (1) nach Anspruch 8,
**gekennzeichnet durch**
wenigstens ein signaltechnisch mit der Lenkelektronik (8) verbundenes Bremsmodul (10), das zum Ansteuern von zumindest den lenkbaren Rädern (3, 4) zugeordneten Radbremsen (11) eingerichtet ist, wobei die Lenkelektronik (8) eingerichtet ist, das Bremsmodul (10) derart anzusteuern, dass das Bremsmodul (10) in dem Notbetrieb des Steer-by-Wire-Systems (2) eine maximal erzeugbare Bremskraft derjenigen Radbremse (11), die einem lenkbaren Rad (3, 4) mit einem ausgefallenen Lenkaktuator (6, 7) zugeordnet ist, auf einen vorgegebenen Grenzwert begrenzt.

10. Verfahren zum Betreiben eines Steer-by-Wire-Systems (2) eines Kraftfahrzeugs (1), wobei das Steer-by-Wire-System (2) wenigstens zwei in einem Normalbetrieb des Steer-by-Wire-Systems (2) unabhängig voneinander lenkbare Räder (3, 4) und wenigstens zwei Lenkaktuatoren (6, 7) aufweist, die jeweils einem der lenkbaren Räder (3, 4) zugeordnet sind und zum Einstellen eines Lenkwinkels des jeweiligen lenkbaren Rads (3, 4) eingerichtet sind, wobei

erfasst wird, ob einer der Lenkaktuatoren (6, 7) ausgefallen ist,

**dadurch gekennzeichnet, dass**

dass bei Erfassung eines einen Notbetrieb des Steer-by-Wire-Systems (2) kennzeichnenden Ausfalls eines Lenkaktuators (6, 7) der wenigstens eine weitere Lenkaktuator (6, 7) mit einer Lenkübersetzung angesteuert wird, deren Direktheit von einer Direktheit einer Lenkübersetzung in dem Normalbetrieb abweicht, wobei aus einer oder mehreren Lenkübersetzungen eine bestimmte Lenkübersetzung ausgewählt und zum Ansteuern des wenigstens einen nicht ausgefallenen Lenkaktuators verwendet wird, und wobei die Einstellung der abweichenden Lenkübersetzung einmalig bei Eintritt des Notbetriebes erfolgt.

11. Verfahren nach Anspruch 10,
**dadurch gekennzeichnet, dass**
bei Erfassung des Ausfalls des Lenkaktuators (6, 7) der wenigstens eine weitere Lenkaktuator (6, 7) mit einer direkteren Lenkübersetzung als in dem Normalbetrieb angesteuert wird.

**Claims**

1. Steer-by-wire system (2) for a motor vehicle (1), having at least two wheels (3, 4) which can be steered independently of one another in normal operation of the steer-by-wire system (2),

   at least two steering actuators (6, 7) which are each assigned to one of the steerable wheels (3, 4) and are set up for setting a steering angle of the respective steerable wheel (3, 4), and
   at least one steering electronics (8) which is connected signal technically to the steering actuators (6, 7) and is set up to control the steering actuators (6, 7) individually on the basis of steering commands, wherein
   the steering electronics (8) is set up to detect whether one of the steering actuators (6, 7) has failed
   **characterized in that**
   the steering electronics (8) is set up to control the at least one further steering actuator (6, 7) with a steering ratio when a failure of a steering actuator (6, 7), which is characteristic of an emergency operation of the steer-by-wire system (2), is detected, the directness of which deviates from a directness of a steering ratio in normal operation, the steering electronics (8) also being set up to select a specific steering ratio from one or more steering ratios and to use it to control the at least one steering actuator that has not failed, and the different steering ratio is set once when emergency operation occurs.

2. Steer-by-wire system (2) according to claim 1,
   **characterized in that**
   the steering electronics (8) is set up to control the at least one further steering actuator (6, 7) with a more direct steering ratio than in normal operation when the failure of the steering actuator (6, 7) is detected.

3. Steer-by-wire system (2) according to claim 1 or 2,
   **characterized in that**
   at least one steering actuator (6, 7) is designed in such a way that, if it fails, it blocks a steering movement of the steerable wheel (3, 4) assigned to it.

4. Steer-by-wire system (2) according to claim 1 or 2,
   **characterized in that**
   at least one steering actuator (6, 7) is designed in such a way that, if it fails, it releases a steering movement of the steerable wheel (3, 4) assigned to it.

5. Steer-by-wire system (2) according to claim 1 or 2,
   **characterized in that**
   at least one steering actuator (6, 7) is designed in such a way that, if it fails, it dampens a steering movement of the steerable wheel (3, 4) assigned to it.

6. Steer-by-wire system (2) according to claim 1 or 2,
   **characterized by**
   at least one coupling device (9) signal technically connected to the steering electronics (8), which is set up to mechanically couple the steerable wheels (3, 4) of a wheel axle to one another in a coupling state of the coupling device (9) and in a decoupling state of the coupling device (9) mechanically decoupled from one another, the steering electronics (8) being set up to control the coupling device (9) in such a way that the coupling device (9) is in its decoupling state and in normal operation of the steer-by-wire system (2) the emergency operation of the steer-by-wire system (2) is in its coupling state.

**7.** Steer-by-wire system (2) according to any one of the preceding claims
**characterized in that**
the setting of the deviating steering ratio takes place once when emergency operation occurs.

**8.** Motor vehicle (1),
**characterised by**
a steer-by-wire system (2) according to one of claims 1 to 7.

**9.** Motor vehicle (1) according to claim 8,
**characterised by**
at least one brake module (10) signal technically connected to the steering electronics (8), which is set up to control wheel brakes (11) assigned to at least the steerable wheels (3, 4), the steering electronics (8) being set up that to control the brake module (10) in such a way that the brake module (10) in the emergency operation of the steer-by-wire system (2) has a maximum brake force that can be generated by those wheel brakes (11) that have a steerable wheel (3, 4) with a failed steering actuator (6, 7) is assigned, limited to a predetermined limit value.

**10.** A method for operating a steer-by-wire system (2) of a motor vehicle (1), the steer-by-wire system (2) at least two in normal operation of the steer-by-wire system (2) independently steerable wheels (3, 4) and at least two steering actuators (6, 7) which are each assigned to one of the steerable wheels (3, 4) and are used to set a steering angle of the respective steerable wheel (3, 4), whereby
it is detected whether one of the steering actuators (6, 7) has failed,
**characterized in that**
that upon detection of a failure of a steering actuator (6, 7) that characterizes emergency operation of the steer-by-wire system (2), the at least one further steering actuator (6, 7) is controlled with a steering ratio whose directness depends on the directness of a steering ratio in deviates from normal operation, whereby a certain steering ratio is selected from one or more steering ratios and used to control the at least one steering actuator that has not failed, and the setting of the deviating steering ratio occurs once when emergency operation occurs.

**11.** The method according to claim 10,
**characterized in that**
when the failure of the steering actuator (6, 7) is detected, the at least one further steering actuator (6, 7) is controlled with a more direct steering ratio than in normal operation.

**Revendications**

**1.** Système de direction par fil (2) pour un véhicule automobile (1), comportant au moins deux roues (3, 4) qui peuvent être dirigées indépendamment l'une de l'autre en fonctionnement normal du système de direction par fil (2),

au moins deux actionneurs de direction (6, 7) qui sont chacun associés à l'une des roues directrices (3, 4) et sont configurés pour régler un angle de braquage de la roue directrice respective (3, 4), et
au moins une électronique de direction (8) qui est techniquement reliée par signal aux actionneurs de direction (6, 7) et est configurée pour commander individuellement les actionneurs de direction (6, 7) sur la base d'instructions de direction, dans lequel
l'électronique de direction (8) est configurée pour détecter si l'un des actionneurs de direction (6, 7) est défaillant
**caractérisé en ce que**
l'électronique de direction (8) est configurée pour commander le au moins un autre actionneur de direction (6, 7) avec un rapport de direction en cas de défaillance d'un actionneur de direction (6, 7), qui est caractéristique d'un fonctionnement d'urgence de le système de direction par fil (2), est détecté, dont le caractère direct s'écarte d'un caractère direct d'un rapport de direction en fonctionnement normal, l'électronique de direction (8) étant également configurée pour sélectionner un rapport de direction spécifique d'un ou plusieurs rapports de direction et de l'utiliser pour contrôler l'au moins un actionneur de direction qui n'a pas échoué, et le rapport de direction différent est défini une fois lorsqu'une opération d'urgence se produit.

**2.** Système de direction par fil (2) selon la revendication 1,
**caractérisé en ce que**
l'électronique de direction (8) est configurée pour commander le au moins un autre actionneur de direction (6, 7) avec un rapport de direction plus direct qu'en fonctionnement normal lorsque la défaillance de l'actionneur de direction (6, 7) est détectée.

**3.** Système de direction par fil (2) selon la revendication 1 ou 2,
**caractérisé en ce que**
au moins un actionneur de direction (6, 7) est conçu de telle sorte qu'en cas de défaillance, il bloque un mouvement de direction de la roue orientable (3, 4) qui lui est affectée.

**4.** Système de direction par fil (2) selon la revendication 1 ou 2,
**caractérisé en ce que**
au moins un actionneur de direction (6, 7) est conçu de telle sorte qu'en cas de défaillance, il libère un mouvement de direction de la roue orientable (3, 4) qui lui est affectée.

**5.** Système de direction par fil (2) selon la revendication 1 ou 2,
**caractérisé en ce que**
au moins un actionneur de direction (6, 7) est conçu de telle sorte qu'en cas de défaillance, il amortisse un mouvement de direction de la roue orientable (3, 4) qui lui est affectée.

**6.** Système de direction par fil (2) selon la revendication 1 ou 2,
**caractérisé par**
au moins un signal d'attelage (9) connecté techniquement à l'électronique de direction (8), qui est conçu pour coupler mécaniquement les roues directrices (3, 4) d'un essieu de roue entre elles dans un état d'attelage du cou -dispositif d'attelage (9) et dans un état de découplage du dispositif d'attelage (9) découplés mécaniquement l'un de l'autre, l'électronique de direction (8) étant configurée pour commander le dispositif d'attelage (9) de telle sorte que l'attelage le dispositif (9) est dans son état de découplage et en fonctionnement normal du système de direction par fil (2) le fonctionnement de secours du système de direction par fil (2) est dans son état d'accouplement.

**7.** Système de direction par fil (2) selon l'une quelconque des revendications précédentes
**caractérisé en ce que**
le réglage du rapport de direction divergent a lieu une seule fois en cas de fonctionnement d'urgence.

**8.** Véhicule automobile (1),
**caractérisé par**
un système de direction par fil (2) selon l'une des revendications 1 à 7.

**9.** Véhicule automobile (1) selon la revendication 8,
**caractérisé par**
au moins un signal de module de freinage (10) relié techniquement à l'électronique de direction (8), qui est configuré pour commander des freins de roue (11) associés à au moins les roues directrices (3, 4), l'électronique de direction (8) étant régler que pour contrôler le module de freinage (10) de telle manière que le module de freinage (10) dans le fonctionnement d'urgence du système de direction par fil (2) ait une force de freinage maximale qui peut être générée par ceux-ci les freins de roue (11) qui ont une roue orientable (3, 4) avec un actionneur de direction défaillant (6, 7) sont affectés, limités à une valeur limite prédéterminée.

**10.** Procédé pour faire fonctionner un système de direction par fil (2) d'un véhicule automobile (1), le système de direction par fil (2) au moins deux en fonctionnement normal du système de direction par fil (2) des roues orientables indépendamment (3, 4) et au moins deux actionneurs de direction (6, 7) qui sont chacun affectés à l'une des roues orientables (3, 4) et sont utilisés pour régler un angle de braquage de la roue orientable respective (3, 4), de laquelle on détecte si l'un des actionneurs de direction (6, 7) est défaillant,
**caractérisé en ce que**
que lors de la détection d'une défaillance d'un actionneur de direction (6, 7) qui caractérise le fonctionnement d'urgence du système de direction par fil (2), le au moins un autre actionneur de direction (6, 7) est commandé avec un rapport de direction dont le caractère direct dépend du caractère direct d'un rapport de direction s'écarte du fonctionnement normal, un certain rapport de direction étant sélectionné parmi un ou plusieurs rapports de direction et utilisé pour commander le au moins un actionneur de direction qui n'est pas défaillant, et le réglage du rapport de direction déviant se produit une fois en cas de fonctionnement d'urgence.

11. Procédé selon la revendication 10,
**caractérisé en ce que**
lorsque la défaillance de l'actionneur de direction (6, 7) est détectée, l'au moins un autre actionneur de direction (6, 7) est commandé avec un rapport de direction plus direct qu'en fonctionnement normal.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040140147 A1

- US 7912606 B2